## Europäisches Patentamt
## European Patent Office
## Office européen des brevets

(19)

(11) Publication number: **0 163 434**
**B1**

(12) # EUROPEAN PATENT SPECIFICATION

(45) Date of publication of patent specification: **02.11.89**

(51) Int. Cl.⁴: **F 16 C 32/06,** F 04 D 29/04

(21) Application number: **85303143.3**

(22) Date of filing: **02.05.85**

(54) **Pump with hydrostatic bearing.**

(30) Priority: **16.05.84 US 610895**

(43) Date of publication of application:
**04.12.85 Bulletin 85/49**

(45) Publication of the grant of the patent:
**02.11.89 Bulletin 89/44**

(84) Designated Contracting States:
**CH DE FR GB LI NL SE**

(56) References cited:
**EP-A-0 042 345**
**DE-A-1 675 106**
**DE-C- 735 957**
**US-A-3 671 137**

(73) Proprietor: **BW/IP INTERNATIONAL INC.**
**200 Oceangate, Suite 900**
**Long Beach California 90802-4371 (US)**

(72) Inventor: **Mulders, Johannes Adrianus**
**Van Rooylan 55**
**Etten-Leur (NL)**

(74) Representative: **Williams, Trevor John et al**
**J.A. KEMP & CO. 14 South Square Gray's Inn**
**London WC1R 5EU (GB)**

EP 0 163 434 B1

Courier Press, Leamington Spa, England.

## Description

### Field of the invention

The use of hydrostatic bearings to support the pump shaft of a centrifugal pump is known in the art. In order to be effective, hydrostatic bearings must be supplied with a fluid under pressure when the pump is operating. The fluid is usually the pump product which is desirable in that the pump case can be sealed, so that the product does not escape to the atmosphere. This is especially true when corrosive, radioactive and other atmosphere contaminating fluids are being pumped. However, in the event of a large pressure loss due to cavitation or other conditions, a hydrostatic bearing may run dry and be severely damaged which can severely hamper its function to support the pump shaft.

### Description of the prior art

U.S. Patent No. 3,671,137, issued June 20, 1972 to Ball, teaches the use of a hydrostatic bearing in a centrifugal pump in which an auxiliary centrifugal pumping means is used to circulate bearing energizing fluid from the discharge zone of the main pump impeller. The auxiliary impeller is mounted on the same shaft as the main impeller.

U.S. Patent No. 4,194,796, issued March 25, 1980 to Svensson et al teaches a device for maintaining a required pump activated liquid pressure in a hydrostatic bearing during pump slowdown. An additional pump is used to supply the requisite liquid pressure to liquid in an accumulator and thence to the bearing. The patent teaches a rotatable ring with multiple hydrostatic bearings therearound, each bearing being supplied by liquid pressure by its own main pump and at least one additional pump to supply liquid pressure in case of a main pump slowdown.

The invention herein being described relates to a hydrostatic bearing usable in a centrifugal pump and especially in a multiple stage centrifugal pump, the bearing being generally located substantially midway between the ends of the pump case and between an intermediate stage and the final stage. The pressure differential between the stages of a multiple stage pump can be significant, as for example, over 27.6 bar (400 psi) in a twelve stage pump.

The hydrostatic bearing of the present disclosure centres the pump or impeller shaft in the pump casing, and is supplied with energising fluid pressure from the final stage of the pump. The energising fluid flows through the bearing and back to an intermediate stage.

DE—A—1 675 106 discloses a centrifugal pump in accordance with the prior art portion of claim 1. The present invention, as characterised in claim 1, provides individual control of separate circumferentially arranged pockets of the hydrostatic bearing by simple ball valve very quickly in response to changes in pressure supply to the bearing with the individual balls being movable under the influence of oppositely acting pressures to ensure connection of an auxiliary source of pressure fluid to maintain the bearing whenever the outlet pressure from the pump drops to a predetermined level. Thus, to avoid damage to the shaft and seizure of the bearing in the event that the internal fluid pressure flow ceases due to pump failure or cavitation, means responsive to the fluid pressure or the lack of same is provided to supply fluid pressure to the bearing, said means comprising an external source and the integral one-way ball valves. The valve, incorporated in the bearing in the form of the ball in a cylindrical track, automatically permits the flow of fluid pressure from the auxiliary source when the internal pressure flow ceases, and automatically shuts off the auxiliary supply of fluid pressure upon resumption of the normal pump operation. Any suitable device can be used to provide the auxiliary fluid pressure supply, so long as it is independent of the centrifugal pump incorporating the subject hydrostatic bearing.

One way of carrying out the invention is described in detail below with reference to drawings which illustrate only one specific embodiment, in which:—

Figure 1 is a partial sectional view of a multistage centrifugal pump taken longitudinally through the pump case and along the major axis of the pump impeller assembly, showing the hydrostatic bearing of this invention;

Figure 2 is a partial sectional view of a portion of a multistage centrifugal pump on an enlarged scale illustrating the hydrostatic bearing and one-way valve of this invention taken longitudinally through the pump case and along line 2—2 of Figure 3;

Figure 3 is a partial sectional view taken on line 3—3 of Figure 2; and

Figure 4 is an enlarged sectional view of the valve shown in Figure 2.

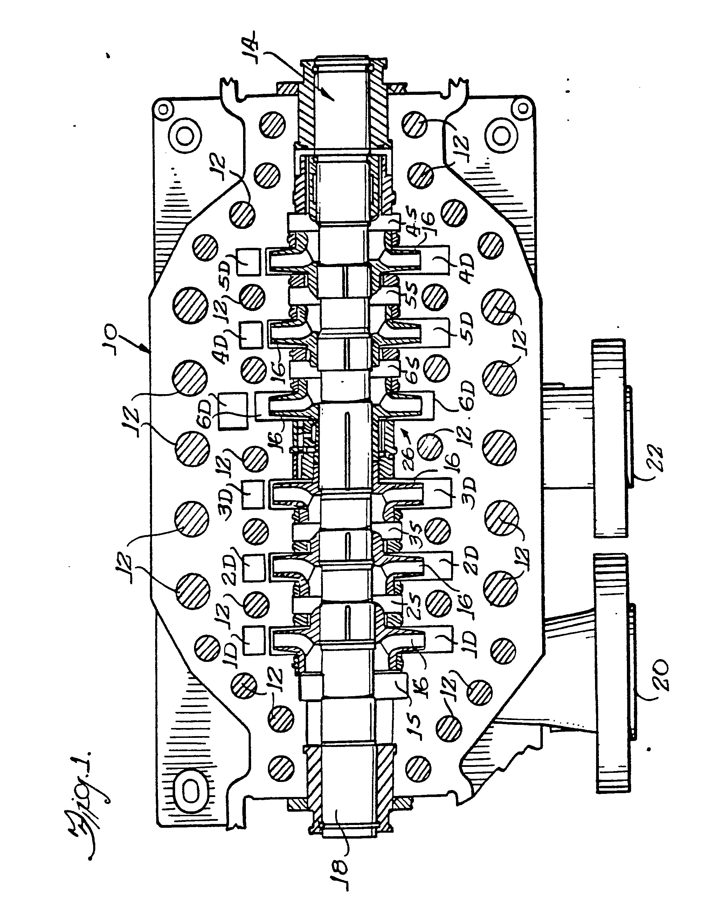

Referring to Figure 1 of the drawings, a typical pump case is designated by the reference numeral 10 and is generally of two piece construction. Only the lower part is shown, the parts being connected together in fluid tight relation by a pattern of fastener studs 12, shown in cross-section. An impeller assembly 14 is suitably journaled in case 10 and comprises a plurality of centrifugal impellers 16 mounted on an impeller shaft 18 for rotation therewith, the shaft being rotatably driven by a suitable motor (not shown). Each impeller 16, is disposed in alignment within stage discharge chambers 1D to 6D as shown with the suction throat of each impeller in communication with respective suction chambers 1S to 6S. Case 10 is equipped with a fluid suction inlet 20 and a fluid discharge outlet 22.

Passageways (not shown) are defined in case 10 to connect the successive stages of chambers as follows: chamber 1D to chamber 2S; chamber 2D to chamber 3S; chamber 3D to chamber 4S; chamber 4D to chamber 5S; and chamber 5D to chamber 6S. Passageways (not shown) are also defined in case 10 to connect suction inlet 20 with suction chamber 1S and discharge chamber 6D with discharge outlet 22.

Various devices are used to substantially eliminate leakage of the pump product along the shaft 18 to the exterior of the case and into the environment in which the pump is used. As seen in Figure 1, the hydrostatic bearing 26 of this invention supports the shaft 18 substantially midway of its axial extent.

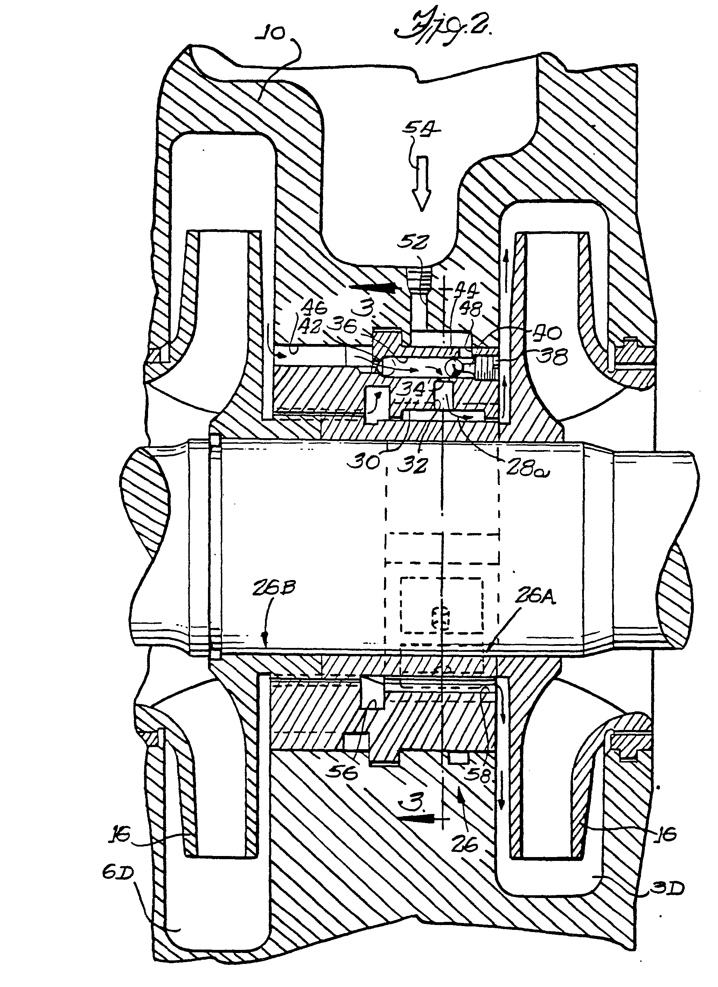

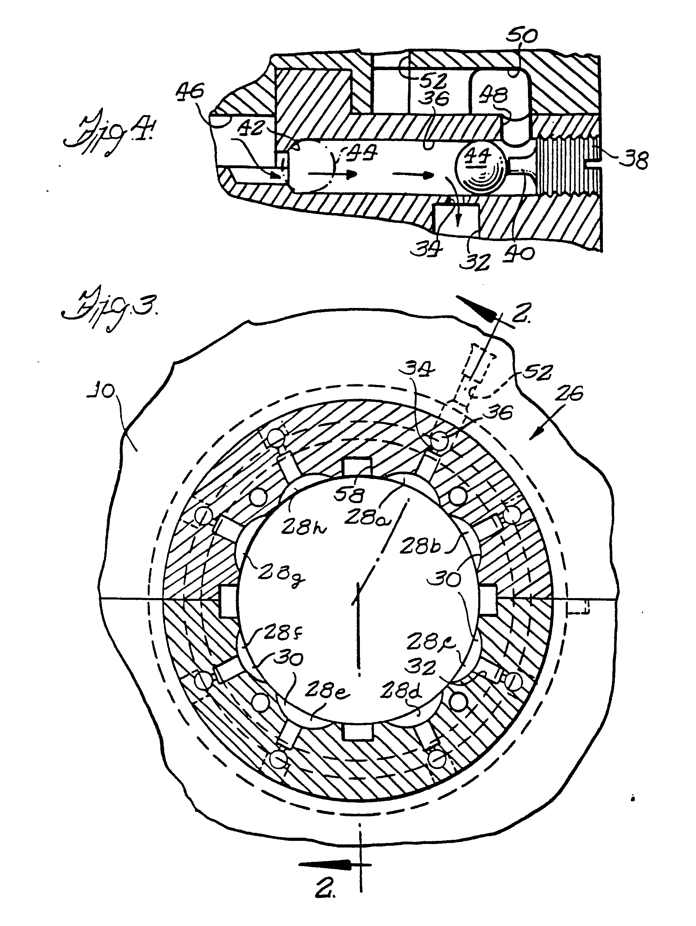

Figure 2 illustrates, on an enlarged scale, a portion of the case 10, shaft 18, impellers 16, discharge chambers 3D and 6D and the hydrostatic bearing 26 which centers the shaft 18 in the case 10. One part 26A of the hydrostatic bearing 26 (see also Figure 3) comprises a plurality, specifically 8, of pockets 28a, 28b, 28c, 28d, 28e, 28f, 28g and 28h spaced circumferentially around its inner bore and opening inwardly of the bearing. As seen especially in Figure 3, these pockets are concave, the wall 30 of each pocket providing an inwardly facing cylindrical surface. Each pocket 28a through 28h has a hole 32 located centrally thereof. Each hole 32 has a restricted portion 34, and opens into an axially aligned cylindrical bore 36 (see also Figure 4). The bore 36 is closed at one end by a plug 38 having a projecting portion 40, and is restricted at the other end to form a seat 42 for a ball 44. The projecting portion 40 also forms a seat for the ball 44 during normal pump operation. The restricted end 42 of each bore 36 communicates with an axial passageway 46 formed at the juncture of the bearing and the case and which communicates with discharge chamber 6D.

A series of radially oriented openings 48 is provided in the wall of the bearing, each opening one end into the bore 36 and at the other end into a circular chamber 50, the latter being connected to a passageway 52 connected to an external fluid pressure source 54. In the drawings, the fluid passageway 52 is radially aligned with the pocket 28a; however, it could be placed in a different location or with a different orientation without departing from the spirit of the invention.

The external pressure source 54 can be of any type which is operated independently of the pump construction described, so that it can supply fluid under pressure to the hydrostatic bearing when cavitation occurs.

Another part 26B of the hydrostatic bearing 26, is generally cylindrical having a very small clearance with the shaft 18. This part is provided with an open ended cylindrical cavity 56 which communicates with a plurality of open ended axial slots 58 in parts 26A.

## Operation

When the pump is operating normally, fluid is pumped from suction inlet 20 to discharge outlet 22 and in the flow pattern described before. Fluid under discharge pressure passes through passageways 46 into cylindrical bores 36, through restricted portions 34 of holes 32; into holes 32 and into the respective pockets 28a through 28h around the shaft 18 and back to intermediate stage chamber 3D from whence it flows to and through the other stages of the pump to ultimate discharge. There may be some flow into cavity 56 and then to one or more slots 58. From slots 58, the fluid flow is to the intermediate stage chamber 3D and so forth. Flow along the shaft surrounded by part 26B is to cavity 56, to slots 58, and thence to chamber 3D.

In the event that the fluid pressure flowing into the pockets 28a through 28h falls below a predetermined level which is below the pressure of the fluid at the auxiliary source 54, the auxiliary source pressure will move the balls 44 away from projections 40 and cause them to seat on seats 42, which permits flow of fluid pressure from passageway 52, chamber 50, through openings 48 into the bores 36 and thence to pockets 28a through 28h, thus protecting the bearing and providing continued centering of the shaft when pump malfunction occurs. Upon return to normal operation and with the pump pressure above the auxiliary pressure, the balls automatically return and seat against the projections 40, blocking fluid entry from openings 48 into bores 36.

## Claims

1. A centrifugal pump comprising a pump case (10) including at least one pumping chamber therein: a shaft (18) rotatably mounted in said case, a centrifugal impeller (16) disposed in said chamber (6d) and supported by said shaft, said impeller being constructed and arranged to receive product fluid from a suction inlet (6s) and to move said product fluid to a discharge outlet (6d) at an increased pressure in response to rotation of said shaft, and a hydrostatic bearing (26) mounted in said pump case surrounding said shaft to support said shaft for rotation, said hydrostatic bearing being connected to receive fluid normally from said discharge outlet or otherwise from an external auxiliary source for subsequent discharge to a low pressure area of the pump, characterised in that said hydrostatic bearing comprises a plurality of circumferential pockets (28) around said shaft, in that passages (36) are provided each with a restricted connection (34) communicating with a respective one of said circumferential pockets (28), each said passage having separate fluid communications (42, 48) with said discharge outlet and with said auxiliary source of fluid, and a pressure responsive flow control valve comprising a ball (44) disposed in said passage for movement with respect to said restricted connection in said passage, said ball having opposite sides thereof exposed respectively to fluid from said discharge outlet and to fluid from said auxiliary source of fluid, said ball being movable in response to a predetermined pressure drop in said product fluid from one side to the other of the restricted connection to permit flow of auxiliary fluid to said bearing pocket.

2. A pump according to claim 1, characterised in that it is a multi-stage pump having a plurality of impellers (16) connected in series, said discharge outlet (60) being from the last of said impellers and the discharge from said hydrostatic bearing being to a lower pressure impeller chamber (30).

3. A pump according to claim 2, characterised in that the ball (44) containing passages (36) are provided arranged circumferentially of the bearing, each passage (36) extending axially of the pump.

4. A multi-stage centrifugal pump according to claim 2 or 3, characterised in that the hydrostatic bearing is located centrally of the case with a plurality of impellers on either side thereof.

**Patentansprüche**

1. Zentrifugalpumpe mit einem Pumpengehäuse (10), welches mindestens eine Pumpenkammer aufweist, darin eine drehbar in dem Gehäuse angeordnete Welle (18), ein Zentrifugalimpeller (16), der in der Kammer (6d) angeordnet und von der Welle getragen wird, wobei der Impeller angeordnet und ausgeführt ist, um ein Produktenströmungsmittel von einer Saugöffnung (6s) aufzunehmen und das Produktenströmungsmittel zu einer Ausgangsöffnung (6d) mit einem erhöhten Druck als Reaktion auf die Drehung der Welle zu verbringen, und ein hydrostatisches Lager (26), welches im dem Pumpengehäuse angeordnet ist und die Welle umgibt, um die Welle zur Drehung zu lagern, wobei das hydrostatische Lager verbunden ist, um Strömungsmittel normal von der Auslaßöffnung aufzunehmen oder sonst von einer externen Hilfsquelle zur nachfolgenden Förderung auf einen Niederdruckbereich der Pumpe, dadurch gekennzeichnet, daß das hydrostatische Lager eine Vielzahl von in Umfangsrichtung angeordneten Taschen (28) um die Welle aufweist, daß Durchlässe (36) vorgesehen sind, die jeweils in einer beschränkten Verbindung (34) mit jeweils einer der in Umfangsrichtung angeordneten Taschen (28) in Verbindung stehen, wobei jeder Durchlaß getrennte Strömungsmittelverbindungen (42, 48) mit der Auslaßöffnung und mit der Hilfsquelle des Strömungsmittels aufweist und ein druckempfindliches Durchflußregelventil mit einer Kugel (44) in dem Durchlaß angeordnet ist zur Bewegung mit Bezug auf die beschränkte Verbindung in dem Durchlaß, wobei die Kugel mit ihren gegenüberliegenden Seiten jeweils dem Strömungsmittel von der Auslaßöffnung und dem Strömungsmittel von der Hilfsquelle des Strömungsmittels ausgesetzt ist, wobei die Kugel als Reaktion auf einen vorbestimmten Druckabfall in dem Produktenströmungsmittel von einer Seite zu der anderen der beschränkten Verbindung bewegbar ist, um einen Strom von Hilfsströmungsmittel in die Lagertasche zu ermöglichen.

2. Pumpe nach Anspruch 1, dadurch gekennzeichnet, daß es eine Mehrstufenpumpe ist mit einer Vielzahl von Impellern (16), die in Reihe verbunden sind, wobei die Ausgangsöffnung (60) von dem letzten der Impeller vorgesehen ist und der Auslaß von dem hydrostatischen Lager zu einer Niederdruckimpellerkammer (30) vorgesehen ist.

3. Pumpe nach Anspruch 2, dadurch gekennzeichnet, daß die Kugel (44) enthaltenden Durchlässe (36) in Umfangsrichtung des Lagers angeordnet sind, wobei jeder Durchlaß (36) sich axial zu der Pumpe erstreckt.

4. Mehrstufenzentrifugalpumpe nach Anspruch 2 oder 3, dadurch gekennzeichnet, daß das hydrostatische Lager zentral in dem Gehäuse mit einer Vielzahl von Impellern an jeder seiner Seite angeordnet ist.

**Revendications**

1. Pompe centrifuge comprenant un corps de pompe (10) comportant au moins une chambre de pompage; un arbre (18) monté dans le corps de manière à pouvoir être mis en rotation, une roue centrifuge (16) disposée dans la chambre (6d) et supportée par l'arbre, la roue étant construite et disposée de manière à recevoir le fluide formé à partir d'une entrée d'aspiration (6s) et à déplacer le fluide formé jusqu'à un orifice de refoulement (6d) à une pression accrue en réponse à la rotation de l'arbre, et un palier hydrostatique (26) monté dans le corps de pompe entourant l'arbre pour supporter l'arbre en rotation, la palier hydrostatique étant connecté de manière à recevoir le fluide provenant normalement de l'orifice de refoulement ou sinon à partir d'une source auxiliaire extérieure pour refoulement ultérieur jusqu'à une zone à basse pression de la pompe, caractérisée en ce que le palier hydrostatique comprend une multitude d'alvéoles circonférentielles (28) autour de l'arbre, en ce que des passages (36) sont ménagés ayant chacun une connexion contrôlée (34) communiquant avec une alvéole respective parmi les alvéoles circonférentielles (28), chaque passage ayant des communications fluidiques séparées (42, 48) avec l'orifice de refoulement et avec la source auxiliaire de fluide, et une soupape de commande du débit répondant à la pression qui comprend une bille (44) disposée dans le passage pour déplacement par rapport à la connexion contrôlée dans le passage, la bille ayant ses côtés opposés respectivement exposés au fluide provenant de l'orifice de refoulement et au fluide provenant de la source auxiliaire de fluide, la bille étant mobile en réponse à une chute prédéterminée de la pression dans le fluide formé entre un côté et l'autre de la connexion contrôlée pour permettre l'écoulement d'un fluide auxiliaire jusqu'à l'alvéole du palier.

2. Pompe selon la revendication 1, caractérisée en ce qu'il s'agit d'une pompe à multiples étages ayant une multitude de roues (16) montées en série, l'orifice de refoulement (60) se trouvant à la dernière des roues et le refoulement au palier hydrostatique s'effectuant vers une chambre (30) à roue à pression plus faible.

3. Pompe selon la revendication 2, caractérisée en ce que les passages (36) contenant la bille (44) sont disposés dans le sens circonférentiel du palier, chaque passage (36) s'étendant dans le sens axial de la pompe.

4. Pompe centrifuge à étages multiples selon la revendication 2 ou 3, caractérisée en ce que le palier hydrostatique est situé au centre du corps avec une multitude de roues sur chacun de ses côtés.

Fig. 1.

EP 0 163 434 B1

*Fig.2.*

Fig. 4.

Fig. 3.